# EUROPEAN PATENT APPLICATION

(11) **EP 0 969 026 A1**
(43) Date of publication of application: **05.01.2000**
(21) Application number: 99304863.6
(22) Date of filing: 22.06.1999
(51) Int. Cl.: C08F 210/10

(54) **Method of manufacturing isobutylene copolymer**

(30) Priority: 29.06.1998 JP 18277398
(71) Applicant: Bridgestone Corporation, Tokyo (JP)
(72) Inventor: Omura, Tetsuya, Kodaira City, Tokyo (JP)
(74) Representative: Whalley, Kevin

(57) **Abstract**

A method of manufacturing an isobutylene-aromatic vinyl compound copolymer by cationic polymerization in the presence of a Lewis acid catalyst and water in a given molar ratio of water to the catalyst of 0.25 to 5, which method has a high yield.

## Description

This invention relates to a method of manufacturing isobutylene copolymer by a cationic polymerization. More particularly, the present invention relates to a method of manufacturing isobutylene-aromatic vinyl compound copolymer having a relatively low molecular weight and suitable for a softener for rubber composition or the like by the cationic polymerization at a high yield and a high efficiency.

Heretofore, for the purpose of facilitating a rubber processing, a softener has been used as a reagent which plays roles of aiding dispersion of the other additives and of facilitating relaxation of polymer.

The softener generally is roughly classified to mineral oil, vegetable oil, and synthetic oil. Among these softeners, as a representative of the mineral oil a petroleum oil softener is commercially available as a product within a wide range from paraffin oil having a lower affinity for rubber to high aromatic oil having higher affinity for rubber, which is consumed in a large amount as an oil-extension oil for an oil-extended SBR as well as a process oil so called.

The aromatic oil has a good compatibility, bleed resistance and the like, and is excellent in workability, but is required to be compounded into a rubber composition in a relatively large amount in order to improve a high hysteresis loss property of the rubber composition. As the result, there is a problem that lowering of fracture resistance of the rubber composition can not be avoided.

In order to solve the problem, using liquid polyisobutylene, liquid butyl rubber or the like has been studied. But, since each of them has a low compatibility with diene based rubber and hence bleeding on a surface of a shaped product, when the shaped product is made to a final article by adhering it with another member, causes a problem of lowering adhesion therebetween.

Further, a diene based polymer having a low molecular weight which has a good compatibility with diene based rubber has been tried to be used, but in addition to a high cost, there is a problem of occurrence of a vulcanization by sulfur.

Therefore, an isobutylene-aromatic vinyl compound copolymer having a relatively low molecular weight has been watched as a softener which improves both fracture properties and high hysteresis loss property, and has a good compatibility with the rubber ingredient of the matrix and a low cost. It is known that a cationic polymerization is useful as the method of manufacturing the isobutylene-aromatic vinyl compound copolymer having a relatively low molecular weight ("Kobunshi-kagaku" volume 18, number 195, pages 389-395 (1961)).

When a polymer having a low molecular weight is manufactured by radical polymerization, in general, a large amount of radical polymerization initiator is used. But in this case, there is a problem of difficulty of molecular weight control. On the other hand, the cationic polymerization is a method of polymerization by using a proton acid or Lewis acid of an electrophilic reagent as an initiator. Concretely, the acid is added to a monomer to produce carbocation (initiation reaction), and subsequently, another monomer is combined therewith to produce a propagating cation having a higher molecular weight (propagation reaction). Since this propagating cation is generally not very stable, a quenching reaction by bonding with an ion pair or other base (termination reaction), or a β-elimination reaction of hydrogens at the terminal of the propagating cation by an ion pair or other monomer occurs. Hence polymer having a high molecular weight is difficult to be generated, if the reaction is not conducted under a specific condition. Therefore, in such a cationic polymerization, selecting a kind of the ion pair enables controlling reaction.

Although, the cationic polymerization is easier in the molecular weight control of the polymer in the relatively low molecular weight region than the radical polymerization, it has a defect of a low yield.

Therefore, under such a situation, it is an object of the present invention to provide a method of effectively manufacturing an isobutylene-aromatic vinyl compound copolymer which has relatively low molecular weight, and is suitable for a softener for rubber composition or the like by a cationic polymerization at a high yield.

In order to attain the above object, the inventor has studied and found that the object can be attained by polymerizing isobutylene with an aromatic vinyl compound by a cationic polymerization in the presence of a Lewis acid catalyst and a predetermined amount of water. The present invention has been accomplished by such a knowledge.

Namely, the present invention provides a method of manufacturing an isobutylene based copolymer characterized in that isobutylene is polymerized with an aromatic vinyl compound by a cationic polymerization in the presence of the Lewis acid catalyst and the water wherein a molar ratio of the water to catalyst is 0.25 to 5.

In the present invention, there is particularly no limitation with respect to the kind of aromatic vinyl compound copolymerized with isobutylene, it can appropriately be selected among various compounds to use in accordance to applications.

As the aromatic vinyl compound, mention may be made of α-position-alkyl-substituted styrene such as α-methyl styrene, α-ethyl styrene, α-methyl-p-methyl styrene or the like; nucleus-alkyl-substituted styrene such as o-methyl styrene, m-methyl styrene, p-methyl styrene, 2,4-dimethyl styrene, ethyl styrene, 2,4,6-trimethyl styrene, o-t-buthyl styrene, p-t-buthyl styrene, p-cyclohexyl styrene or the like; nucleus-halogenated-styrene such as o-chlorostyrene, m-chlorostyrene, p-chlorostyrene, p-bromostyrene, 2-methyl-4-chlorostyrene or the like; in addition to styrene; and further 1-vinyl naphtalene, divinyl benzene or the like. Among them, styrene, α-methyl styrene, and p-methyl styrene are preferable, and styrene is the most preferable. The above mentioned aromatic vinyl compound alone or combination of two or more kinds thereof can be used.

Further, in the present invention, if desired, one or tow or more kind of conjugate diene monomer such as 1,3-butadiene, isoprene, 1,3-pentadiene, 2,3-dimethyl butadiene, 2-phenyl-1,3-butadiene, 1,3-hexadiene and the like may be used as a comonomer.

Further, in the cationic polymerization according to the present invention, Lewis acid catalyst is used as a catalyst. As the Lewis acid catalyst, mention may be made of halides of metals, for example, belonging to IV, V, VIII, XIII, and XIV groups in Periodic table, concretely, TiCl₄, VCl₅, FeCl₃, BCl₃, BF₃, AlCl₃, (C₂H₅)₂AlCl, C₂H₅AlCl₂, SnCl₄ and the like. Among them, TiCl₄ is particularly preferable. The Lewis acid catalyst can be used alone or in the combination of two or more kinds.

An amount of the Lewis acid catalyst may be properly selected according to a ratio of monomers blended and a desired molecular weight of the copolymer.

The cationic polymerization according to the present invention is required to be conducted in the presence of the above mentioned Lewis acid and water wherein the molar ratio of the water to the catalyst is within a range of 0.25 to 5. When the water content is outside the above range, a yield of the copolymer is not sufficiently improved and the object of the present invention can not be attained. From the aspect of the copolymer yield, the molar ratio of the water to the Lewis acid is more preferable to be within a range of 0.5 to 5, particularly, 0.75 to 4.

In the present invention, the cationic polymerization of isobutylene with an aromatic vinyl compound is usually conducted in a solvent. The solvent can properly be selected from solvents generally used in a cationic polymerization and used.

As such a solvent, for example, mention may be made of hydrocarbons such as aliphatic hydrocarbons, aromatic hydrocarbons halogenated, hydrocarbons or the like. In this case, mention may be made of pentane, hexane, cyclohexane or the like as an example of the aliphatic hydrocarbons; benzene, toluene, xylene or the like as an example of the aromatic hydrocarbons; chloromethane, chloroethane, dichloromethane, 1,1-dichloroethane, chloroform, 1,2-dichloroethane or the like as an example of the halogenated hydrocarbons. Among them, the aromatic hydrocarbons, and particularly preferably toluene, are more preferable.

The solvent may be used alone or in a combination of two or more kinds. In addition, use may also be made of a small amount of other solvent; for example, acetic ester such as ethyl acetate or the like, organic compound having a nitro group such as nitroethane or the like.

In this cationic polymerization, a temperature of the polymerization may usually be selected from a range of -100°C to -30°C. When it is lower than -100°C, a rate of the polymerization is too small to be practical, on the other hand, when it exceeds -30°C, a chain-transfer reaction is too violent and thereby the molecular weight of the copolymer obtained tends to decrease extremely which is not preferable. From a viewpoint of the polymerization rate and the molecular weight of the copolymer obtained, the temperature of the polymerization is preferable to be within a range of -80°C to -40°C. Further, the cationic polymerization reaction can be conducted under a self-generating pressure, but it is usually profitable to be conducted under a pressure of sufficiently keeping the monomers in a substantial liquid phase. The pressure may be properly selected depending upon the kinds of monomer and solvent used, upon the temperature of polymerization and the like. An inert gas may, if necessary, be introduced into the reaction system and thereby the polymerization reaction may be conducted under a higher pressure.

After completion the reaction, the copolymer is separated from the reaction solution by adding a poor solvent for the produced copolymer, such as methanol, a mixture of methanol and water or the like into the reaction solution, and then recovered and dried to obtain the objective copolymer.

The isobutylene-aromatic vinyl compound copolymer obtained by the above-mentioned cationic polymerization is a random copolymer in general. When this copolymer is used as a softener for a rubber composition, the molecular weight thereof is profitable to be within a range of 2000 to 50000 in a weight average molecular weight (Mw) reduced as polystyrene measured from a differential refractive index (RI) by a gel permeation chromatography (GPC). When the Mw is less than 2000, there is a fear of decreasing the fracture strength of the rubber composition, on the other hand, when it exceeds 50000, the performance as a softener for rubber composition is difficult to be developed. And from the aspect of the effect, the Mw is preferable to be within a range of 4000 to 42000. Besides, the method of measuring the weight average molecular weight by a GPC will be described later.

Further, when the copolymer is used as a softener for a rubber composition, it is preferable to contain 30-90% by weight of isobutylene unit and 70-10% by weight of aromatic vinyl compound unit. When the content of the aromatic vinyl compound unit is less than 10% by weight, a compatibility with the rubber is decreased, and hence the copolymer is easy to bleed, on the other hand, when it exceeds 70% by weight, the performance as a softener for a rubber composition is unpreferably degraded. When both the compatibility and the performance as a softener for a rubber composition is taken into consideration, the content of isobutylene unit is more preferable to be within a range of 40-80% by weight, and the content of the aromatic vinyl compound unit is more preferable to be within a range of 60-20% by weight.

When the copolymer is used as a softener for a rubber composition, from the viewpoint of compatibility, the content of the aromatic vinyl compound unit in the copolymer is preferable to be higher than that of the aromatic vinyl compound unit in the rubber ingredient in a matrix, and particularly, the difference therebetween is profitable to be not less than 15% by weight.

Besides, the content of the aromatic vinyl compound unit can be calculated from a proton magnetic resonance spectrum as mentioned later.

As mentioned above the isobutylene-aromatic vinyl compound copolymer obtained by the method according to the present invention is suitable for a softener for a rubber composition. For example, when it is applied to a tread rubber composition of a tire as a softener, the amount thereof is preferable to be within a range of 5-200 parts by weight based on 100 parts by weight of rubber ingredient. When it is less than 5 parts by weight, there is a fear that the effect of improving the high hysteresis loss property of the rubber composition is not sufficiently developed, while when it exceeds 200 parts by weight, it brings a cause of decreasing the fracture strength of the rubber composition.

Further, the copolymer may be used together with a conventional softener for a rubber composition, such as an aromatic oil. In this case as well, the total content of the softeners is preferable not to exceed 200 parts by weight based on 100 parts by weight of the rubber ingredient. From the viewpoint of the effect, the amount of the copolymer is preferable to be not less than 15% by weight of the total content of the softeners.

There is particularly no limit about the rubber ingredient in the rubber composition in which the isobutylene-aromatic vinyl compound copolymer is compounded as a softener. But, a diene rubber is preferable. And concretely, mention may be made of natural rubber (NR), synthetic isoprene rubber (IR), butadiene rubber (BR), styrene-butadiene rubber (SBR), butyl rubber (IIR), ethylene-propylene-diene rubber (EPDM), acrylonitrile-butadiene rubber (NBR) or the like. Among them, NR, BR, or SBR is particularly preferable.

The invention will be explained in detail with reference to the examples, which are not intended as limitation thereof.

Besides, the water content in the reaction system and the properties of the obtained copolymer are measured as follows:

### (1) Water content in reaction system

The content in the water in the reaction system is measured by a coulometric titration water content measuring apparatus CA-06 type, made by Mitsubishi Kasei Industry, Ltd. (now Mitsubishi Kagaku Corp.).

### (2) Weight average molecular weight and molecular weight distribution (Mw/Mn ratio) of copolymer

The weight average molecular weight thereof (Mw) is measured by being reduced as polystyrene based on monodispersed polystyrene standard from a differential refractive index (RI) through a gel permeation chromatography (GPC)[GPC; HLC-8020 made by Toso Corp.: column; GMH-XL made by Toso Corp.(two columns in series)], and the number average molecular weight (Mn) is also measured to calculate the molecular weight distribution (hereinafter referred to as GPC-RI).

Additionally, for the purpose of reference, the Mw reduced as polystyrene based on monodispered polystyrene standard is measured by ultraviolet absorption (UV) instead of RI, and measured the Mn thereof to calculate the molecular weight distribution (hereinafter referred to as GPC-UV).

### (3) Content of styrene unit in copolymer

The content of the styrene unit is calculated from an integral ratio by measuring the proton nuclear magnetic resonance spectrum (¹H-NMR) thereof.

Namely, a peak at 0-3 ppm is regarded to as a peak of a proton derived from C-C bond produced by reacting isobutylene and vinyl site of styrene, and a peak at 6-7.5 ppm is regarded to as a peak of a proton of aromatic ring of styrene. Thereby, a molar ratio of styrene unit to isobutylene unit is calculated and then reduced to a weight ratio from the molecular weights thereof to obtain the content of the styrene unit.

Besides, all the materials used in polymerization is dried and purified.

### Example 1

Into a 100 ml flask which is dried and purged with nitrogen, 73 ml of toluene, 5 g of isobutylene, a mixture solution of 5 g of styrene and 16 ml of toluene, and 1 ml of cyclohexane solution containing TiCl₄ in 0.25 mole/little are charged, and water is added thereto to the water content of 0.35 mmole in the reaction system (a molar ratio of H₂O/TiCl₄ is 1.4). And then, polymerization thereabout is conducted for 3 hours at -78°C. No precipitation can be observed from the beginning of the polymerization to the end thereof in the polymerization reaction system.

After completion of the reaction, into the reaction solution, 5 ml of methanol and then 10 ml of water are added to separate the isobutylene-styrene copolymer. Then, the separated isobutylene-styrene copolymer is recovered and subjected to a drying treatment. The results are shown in Table 1.

### Examples 2-5 and Comparative Examples 1-3

The isobutylene-styrene copolymer is produced in the same manner as in the Example 1 except that the water content in the reaction system in the Example 1 is changed as shown in the Table 1. The results are shown in the Table 1.

**Table 1-1**

| | | | Example | | | | |
|---|---|---|---|---|---|---|---|
| | | | 1 | 2 | 3 | 4 | 5 |
| H₂O/TiCl₄ molar ratio in reaction system | | | 1.4 | 0.30 | 0.75 | 1.9 | 4.7 |
| Copolymer | GPC-RI | Mw | 4460 | 5004 | 4470 | 4190 | 5380 |
| | | Mw/Mn | 2.07 | 1.98 | 2.14 | 1.99 | 1.99 |
| | GPC-UV | Mw | 3670 | 4472 | 3840 | 3480 | 4290 |
| | | Mw/Mn | 2.16 | 2.18 | 2.28 | 2.09 | 2.18 |
| | Styrene unit content (wt%) | | 51.6 | 48.2 | 50.8 | 53.2 | 46.2 |
| Copolymer yield (g) | | | 9.8 | 8.2 | 9.7 | 9.4 | 7.2 |
| Copolymer yield (%) | | | 98 | 82 | 97 | 94 | 72 |

**Table 1-2**

| | | | Comparative Example | | |
|---|---|---|---|---|---|
| | | | 1 | 2 | 3 |
| H₂O/TiCl₄ molar ratio in reaction system | | | 0.1 | 7.5 | 11.1 |
| Copolymer | GPC-RI | Mw | 5900 | 5890 | 5880 |
| | | Mw/Mn | 1.92 | 1.92 | 1.92 |
| | GPC-UV | Mw | 5107 | 5120 | 5100 |
| | | Mw/Mn | 2.11 | 2.10 | 2.11 |
| | Styrene unit content (wt%) | | 44.7 | 45.2 | 44.9 |
| Copolymer yield (g) | | | 2.9 | 5.7 | 3.0 |
| Copolymer yield (%) | | | 29 | 57 | 30 |
| note: The yield of the copolymer is calculated from a formula shown below. Copolymer yield (%) = (recovered copolymer (g)/charged monomer (g)) × 100 | | | | | |

Besides, all the copolymers in Examples 1-5 and Comparative Examples 1-3 are random copolymers and substantially do not have isobutylene or styrene block portion observed through ¹H-NMR spectrum.

According to the invention, the isobutylene-aromatic vinyl compound copolymer having a relatively low molecular weight and suitable as a softener for a rubber composition or the like can effectively be manufactured at the high yield by the cationic polymerization.

## Claims

1. A method of manufacturing an isobutylene based copolymer in which isobutylene and an aromatic vinyl compound are subjected to cationic polymerization in the presence of a Lewis acid catalyst and water, wherein the molar ratio of water to the catalyst is 0.25 to 5.

2. A method as claimed in claim 1, characterized in that the isobutylene based copolymer comprises isobutylene units in an amount of 30 to 90% by weight and aromatic vinyl compound units in an amount of 70 to 10% by weight.

3. A method as claimed in claim 1 or 2, characterized in that the weight-average molecular weight of the isobutylene based copolymer is within a range of 2,000 - 50,000.

4. A method as claimed in any of claims 1 to 3, characterized in that the aromatic vinyl compound is at least one of styrene, α-methyl styrene, and p-methyl styrene.

5. A method as claimed in any of claims 1 to 4, characterized in that the Lewis acid catalyst is TiCl₄.

6. A method as claimed in any of claims 1 to 5, characterized in that the temperature in the cationic polymerization is within a range of -100°C to -30°C.

7. A method as claimed in claim 6, characterized in that the temperature in the cationic polymerization is within a range of -80°C to -40°C.

8. A method as claimed in any of claims 1 to 7, characterized in that the cationic polymerization is conducted under a pressure sufficient to keep the isobutylene and the aromatic vinyl compound in liquid phase.

9. A method as claimed in any of claims 1 to 8, characterized in that the molar ratio of water to Lewis acid catalyst is within the range of 0.5 to 5.

10. A method as claimed in claim 9, characterized in that the molar ratio of water to the Lewis acid catalyst is within the range of ratio of 0.75 to 4.

11. A method as claimed in any of claims 1 to 10, characterized in that the isobutylene copolymer is composed of isobutylene units in an amount of 40 to 80% by weight and aromatic vinyl compound units in an amount of 60 to 20% by weight.
